Europäisches Patentamt

European Patent Office

Office européen des brevets

(19)

(11) Veröffentlichungsnummer: **0 162 187**
**A1**

## (12) EUROPÄISCHE PATENTANMELDUNG

(21) Anmeldenummer: 85100649.4

(22) Anmeldetag: 23.01.85

(51) Int. Cl.⁴: **B 25 J 15/00**
**B 25 J 15/04, B 25 J 19/06**

(30) Priorität: 14.02.84 DE 3405110

(43) Veröffentlichungstag der Anmeldung:
27.11.85 Patentblatt 85/48

(84) Benannte Vertragsstaaten:
AT BE CH DE FR GB IT LI SE

(71) Anmelder: Carl Kurt Walther GmbH & Co. KG
Bahnstrasse 43-51 Postfach 11 06 42
D-5600 Wuppertal 11(DE)

(72) Erfinder: Momberg, Wolfgang
Magdalenenstrasse 50
D-5600 Wuppertal 1(DE)

(54) Schnellkupplung für einen Werkzeugträger an einem Roboterarm.

(57) Die Erfindung betrifft einen Roboter mit am Kopfende (2') des Roboterarmes trennbar (1) angeordnetem Werkzeugträger (T) und schlägt zur Erzielung eines aus der eigenen Programmsteuerung veranlaßten Werkzeugträgerwechsels vor, daß die Trennstelle (3) von einer Multi-Schnell-kupplung gebildet ist, derart, daß die Kupplungshälften (a bzw. b) zu je einer werkzeugträgerseitigen (11) und roboterkopfseitigen Kupplungsträgerplatte (1,11) zusammengefaßt sind, welche beiden Kupplungsträgerplatten mittels eines der roboterkopfseitigen Kupplungsträgerplatte (1) zugeordneten druckmittel-steuerbaren Zylinder/Kolben- Aggregats bis in die Kupplungsstellung der Kupplungshälften (a,b) gegeneinander-ziehbar sind.

EP 0 162 187 A1

./...

FIG. 1

1

Roboter

Die Erfindung betrifft einen Roboter mit am Kopfende des Roboterarmes trennbar angeordnetem Werkzeugträger.

Der Werkzeugträger ist am Kopfende angeflanscht. Das Trennen erfordert relativ hohen Zeitaufwand und bedingt bei kollektivem Einsatz eines solchen Montageroboters ein Stillsetzen der Transverstraße. Wenn auch ein verschleißbedingtes Umrüsten in größeren Intervallen fällig wird, so wird durch den Betreiber nur ungern eine generelle Werkzeug-Umbestückung im Hinblick auf eine abweichende Typenmontage hingenommen. Es besteht eher die Tendenz, einen weiteren, teuren Roboter einzusetzen. Außerdem bedarf die Umrüstung besonderer Sorgfalt, da das vom Roboterkopfende gebildete Widerlager nur relativ geringe Belastungskräfte aufnehmen kann, wodurch man meist auf Hilfsvorrichtungen angewiesen ist.

Aufgabe der Erfindung ist es, einen gattungsgemäßen Roboter in herstellungstechnisch einfacher, gebrauchsvorteilhafter Weise so auszubilden, daß der Werkzeugträgerwechsel als einer seiner eigenen programmgesteuerten Arbeitsschritte zwischengeschaltet werden kann, ohne zusätzliche äußere Hilfsvorrichtung.

Gelöst ist diese Aufgabe durch die im Anspruch 1 angegebene Erfindung.

Die Unteransprüche sind vorteilhafte Weiterbildungen des erfindungsgemäßen Roboters.

Zufolge solcher Ausgestaltung ist ein gattungsgemäßer Roboter hoher Wirtschaftlichkeit erzielt: Das Wechseln des Werkzeugträgers geschieht programmgesteuert automatisch unter Nutzung der robotereigenen Energie. Der Roboter fährt in die vorgesehene Ablegeposition und greift sich einen neuen, ausgewählten, dem Arbeitsablauf entsprechend bestückten Werkzeugträger. Es bedarf nicht mehr des umständlichen manuellen Umrüstens bzw. Ab-und Anflanschens. Dazu ist die Trennstelle des Werkzeugträgers einfach von einer Multi-Schnellkupplung gebildet, derart, daß die Kupplungshälften je zu einer werkzeugträgerseitigen und roboterkopfseitigen Kupplungsträgerplatte zusammengefaßt sind, welche beiden Kupplungsträgerplatten mittels eines der roboterkopfseitigen Kupplungsträgerplatte zugeordneten druckmittel-steuerbaren Zylinder/Kolben-Aggregates bis in die Kupplungsstellung der Kupplungshälften gegeneinanderziehbar sind. Die kräfteneutral einziehende Kuppelvorrichtung der Roboterkopfkupplung ermöglicht das Überwinden großer Kräfte innerhalb der Armatur, also ohne den Roboterarm selbst zu belasten. Bei diesen Kupplungen können daher hohe Ventilfederkräfte und Restdrücke des bzw. der eingesetzten Medien problemlos überwunden werden. Es bedarf auch keiner Gegenhaltevorrichtung für das Ankuppeln. Die Versorgung des roboterkopfseitigen Kupplungsträgerplatte mit der erforderlichen Arbeitsenergie erfolgt auf kürzestem Wege. Die andere Kupplungsträgerplatte ist bis zu ihrer Kupplung ein völlig passives Bauteil und so beliebig ortsveränderlich. Die Kupplungsstellung tritt als verriegelte Stellung auf. Durch die zusätzliche bauliche Maßnahme, daß die beiden Kupplungsträgerplatten sich linear zueinander bewegen, wird nicht nur der direkte und sehr zeitsparende Kupplungsweg gegangen; vielmehr können andere Bewegungen durchführende Aggregate entfallen. Dies führt auch insgesamt zu einer sehr gedrungenen Bauform des Roboters. Um trotz der erreichbaren hohen Arbeitsleistung, insbesondere Betriebsgeschwindigkeit unerwartet höhere Berührungsbelastungen, die zu Beschädigungen führen können, mit baulich einfachen Mitteln zu vermeiden, ist der Multi-Schnellkupplung eine Überlast-Sicherungsvorrichtung integriert, derart, daß die roboterkopfseitige Kupplungsträgerplatte unter Zwischenschaltung eines Federpaktes schwimmend gelagert ist und die Grundstellung durch einen Näherungsinitiator abgetastet wird.

Weitere Vorteile und Einzelheiten des Gegenstandes der Erfindung sind nachstehend anhand eines zeichnerisch veranschaulichten Ausführungsbeispieles näher erläutert. Es zeigt

Fig. 1    das die roboterkopfseitige Kupplungshälfte  der Multi-Schnellkupplung tragende Kopfende des Roboters,

Fig. 2    die werkzeugträgerseitige Kupplungsträgerplatte der Multi-Schnellkupplung in kupplungsgerechter Ausrichtung zum Roboterkopf,

Fig. 3    die Multi-Schnellkupplung in gekuppeltem Zustand, im Teilschnitt

Fig. 4    die Stirnansicht gegen die roboterkopfseitige Kupplungsträgerplatte und

Fig. 5    eine Herausvergrößerung des Teilschnittbereichs nach Fig. 3.

Der Roboterarm 1 trägt an seinem freien Ende einen um die Achse x-x und die senkrecht dazu liegende y-y drehbaren Roboterkopf 2. Die letztere verläuft parallel zu einer Armachse y'-y'.

Am Kopfende 2' des Roboterkopfes 2 sitzt fest angeflanscht eine Aufnahme A für einen dieser trennbar zugeordneten Werkzeugträger T. Die Trennstelle 3 ist von einer Multi-Schnellkupplung gebildet. Letztere besteht aus einer roboterkopfseitigen Kupplungsträgerplatte I und einer werkzeugträgerseitigen Kupplungsträgerplatte II. Die beiden Kupplungsträgerplatten I,II sind mittels eines der roboterkopfseitigen Kupplungsträgerplatte I zugeordneten, druckmittel-steuerbaren Zylin-

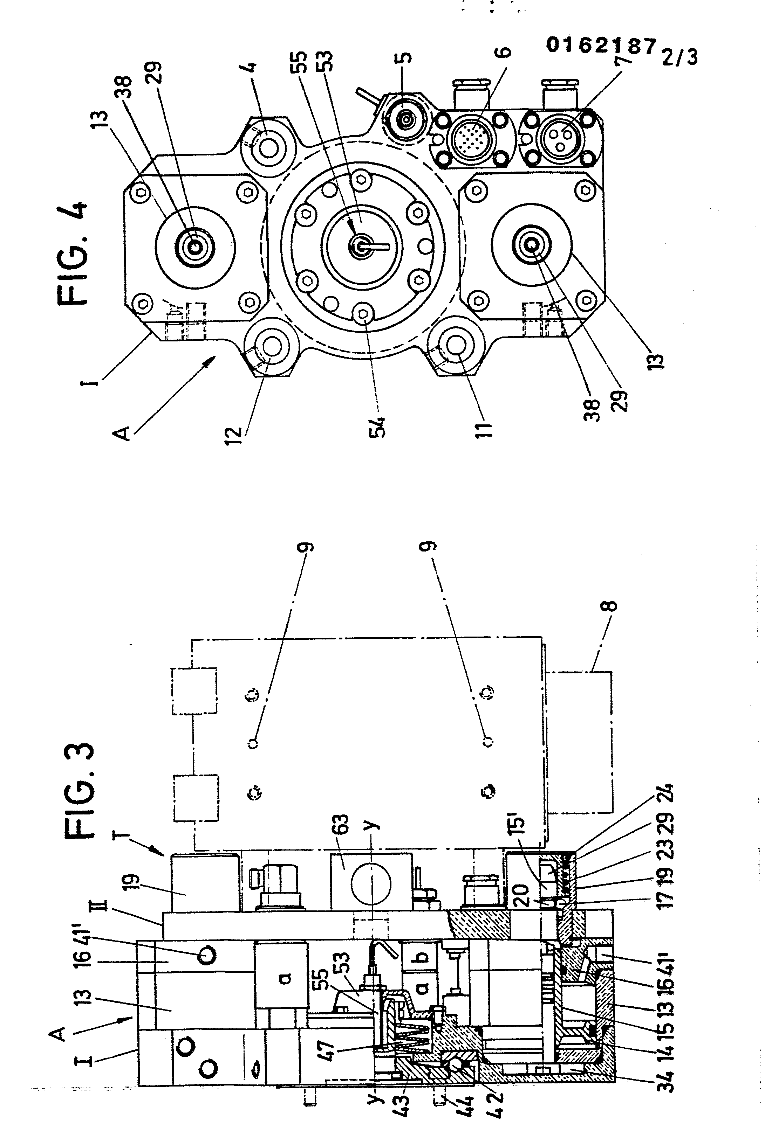

der/Kolben-Aggregats bis in die Kupplungsstellung (Fig. 3) der Kupplungshälften von Versorgungsleitungen bzw. -wegen gegeneinanderziehbar.

Die Kupplungshälften der roboterkopfseitigen Kupplungsträgerplatte I sind durchweg mit a und diejenigen der werkzeugseitigen Kupplungsträgerplatte II durchweg mit b gekennzeichnet. Es kann sich beispielsweise bei flüssigen oder gasförmigen Medien um Verschlußkupplungen handeln. Beim Ausführungsbeispiel handelt es sich nach Fig. 4 bei im Uhrzeigersinn betrachteter Reihenfolge gemäß Position 4 auf der rechten Seite des Trägers T um einen Anschluß für eine Luftleitung. 5 stellt einen Koaxialstecker dar, beispielsweise für eine Hochfrequenz-Steckverbindung. Hier läßt sich ein in den Programmablauf integriertes Mikrofon leitungsmäßig anschließen. 6 gibt einen Elektrostecker wieder, beispielsweise für den Steuerstrom bspw. arbeitszylindersteuernder Ventile des Werkzeugs. Mit 7 ist ein Elektrostecker bezeichnet, welcher zur Speisung eines am Werkzeugträger T angebrachten Transformators 8 dient. Dieser besitzt Befestigungspunkte 9 für eine Schweißzange 10 als Werkzeug.

Auf der anderen Seite weist der Träger T einen Anschluß 11 für Kühlwasser auf. Ein gleicher Anschluß befindet sich noch darüber. Dieser ist mit 12 bezeichnet.

In der in Fig. 3 wiedergegebenen Kupplungsstellung ist der vollständige Versorgungsbedarf für die Arbeitsfunktionen der erwähnten Medien gegeben.

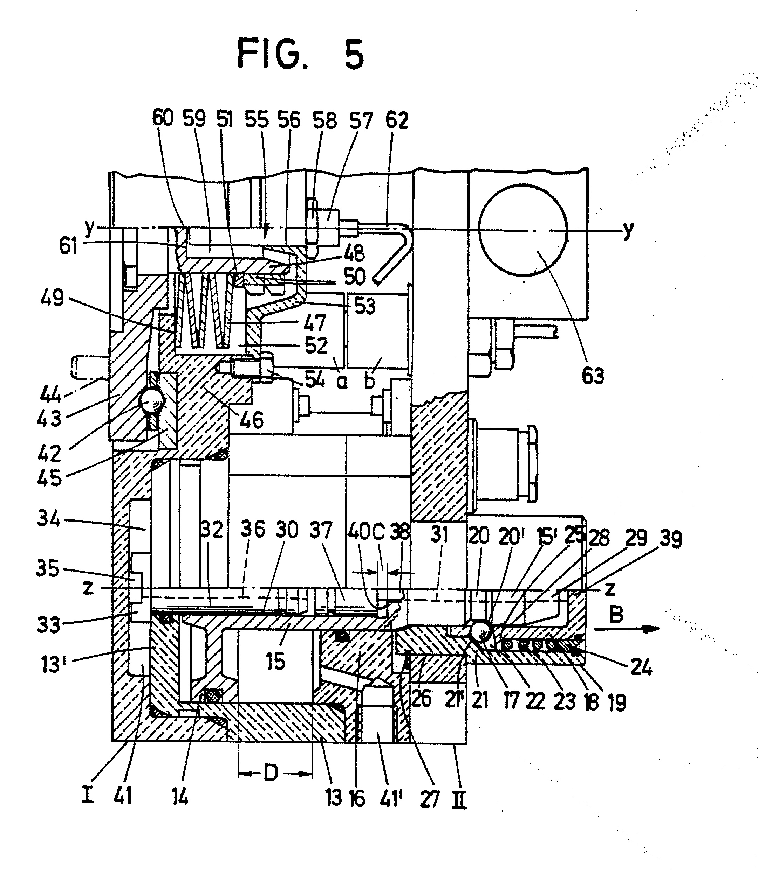

Zur Herbeiführung der Kupplungsstellung setzt sich die roboterkopfseitige Kupplungsträgerplatte I auf der dem Kopfende abgewandten Seite in das erwähnte Zylinder/Kolben-Aggregat fort. Dessen Zylinder ist mit 13 bezeichnet, sein darin beidseitig druckmittelbeaufschlagbarer Kolben mit 14. Dessen Schaft 15 erstreckt sich in Richtung des Werkzeugträgers T, durchsetzt geführt die Zylinderdecke 16 und überragt selbst in zurückgezogener Grundstellung (Fig. 5) diese noch einmal um das Maß, welches dem geführten Längenabschnitt des Schaftes 15 entspricht. Das freistehende Schaftende des Kolbens 14 ist querschnittsreduziert und durchsetzt mit diesem Ende die Kupplungsträgerplatte II. Es verrastet an Sperrkugeln 17 einer an dieser Werkzeugträgerplatte II paarig angeordneten Verriegelungsbüchse 18. Letztere steht unter Federbelastung und ist in einem zylindrischen Gehäuse 19 begrenzt verschieblich verlagerbar. Die Sperrkugeln 17 sind in einer gemeinsamen Querebene zur jeweiligen Aggregat-Mittelachse z-z angeordnet. Die Verriegelungsbüchse 18 fungiert als Kugelkäfig. Das freie Ende 15' des Schaftes 15 weist eine Ringnut 20 trapezförmigen Querschnitts auf. Die Trapezbasisebene liegt sperrkugelseitig. Die eine Flanke 20' der Ringnut 20 bildet die kolbenseitige Stützschulter. Letztere erstreckt sich in einem Winkel von ca. 45° zur Aggregat-Mittelachse z-z. Die gehäuseseitige Stützschulter wird dagegen von einer entsprechend ausgerichteten Flanke 21' einer gehäuseseitigen Schulter 21 gebildet. Die Flanke 21' führt in einen Ausweichraum für die Sperrkugeln 19. Letztere treten bei Verlagerung der Verriegelungsbüchse 18 in Richtung des Pfeiles B in einen Ausweichraum 22 und werden dabei von der Flanke 21' auswärts gesteuert, bis sie vor die von der zylindrischen Ausdrehung des Gehäuses 19 gebildete Ringwand treten. Das zuvor verrastete freie Ende 15' des Kolbens 15 wird dadurch freigegeben.

Die die Verriegelungsbüchse 18 belastende Feder ist mit 23 bezeichnet. Es handelt sich um eine Schraubengang-Druckfeder, die sich mit ihrer einen endständigen Federwindung an einem Ring 24 abstützt und mit ihrer anderen endständigen Federwindung gegen einen Bund 25 der Verriegelungsbüchse 18 wirkt.

Das als Hülse gestaltete Gehäuse 19 sitzt mit seinem querschnittsreduzierten, roboterkopfseitigen Ende in einer Aufnahmebohrung 26 der Kupplungsträgerplatte II. Sein in der genannten Richtung überstehender Endabschnitt wird von einem Sprengring 27 gehalten. Ein Teil dieses einsteckenden Endabschnitts und die zentrale Höhlung der Verriegelungsbüchse formen eine querschnittsgleiche Steckeröffnung 28 für das freie Ende 15' des Schaftes 15.

Das freie Ende 15' bildet schließlich zufolge seiner sich nach auswärts verjüngenden kugelstumpfförmigen Ausgestaltung einen die Steckverbindung begünstigenden Zentrierzapfen 29. Der Stecköffnungsinnenrand ist entsprechend gefast.

Kolben 14 und Schaft 15 sind auf ganzer Länge zentral durchbrochen. Der geführte Schaftabschnitt weist eine Durchbrechung 30 größeren Duchmessers und der restliche, hervorragende Abschnitt eine solche 31 geringeren Durchmessers auf. In den Abschnitt 30 ragt ein zentraler Hohlzapfen 32. Dieser steht in fester Verbindung mit dem Zylinder 13. Er durchsetzt dessen Boden 13' und geht außenseitig des Bodens in einen Kopf 33 größeren Durchmessers über. Der Kopf liegt in einer vom Zylinderboden 13' abgedeckten Kammer 34, welche druckmittelspeisbar ist. Das Druckmittel gelangt über einen Querschacht 35 des Kopfes 33 in den vom Hohlzapfen 32 gebildeten zentralen Kanal 36.

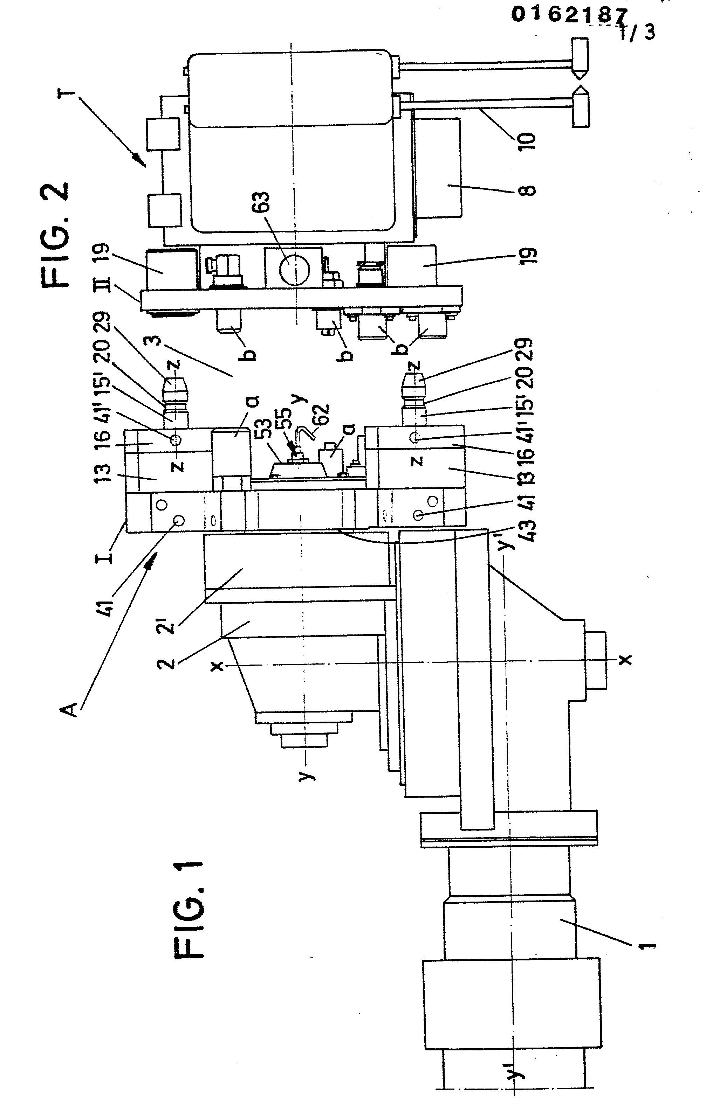

Vor dem innenseitigen Kanalende erstreckt sich ein Kolben 37, dessen Schaft 38 als in der zentralen Durchbrechung 31 verschieblich gelagerter Druckstift an der Innenseite der geschlossenen Decke 39 der topfförmig gestalteten Verriegelungshülse 18 anliegt. In Verriegelungsgrundstellung endet der Kolben 37 in einem Abstand C vor einer durch die Querschnittsreduzierung zwischen den Durchbrechungen 30 und 31 erzeugten Ringschulter 40. Die Speisungsleitung für das über die Kammer 34 eintretende Druckmittel ist mit 41 bezeichnet. Über dieses gleiche Medium wird auch der Kolben 14 in eine Vorstandslage seines Schaftes 15 ausgefahren zum Zwecke der Herbeiführung der Zentrierung und Kupplung der Kupplungsträgerplatte I mit der Kupplungsträgerplatte II. Diese Vorstandslage ergibt sich aus Fig. 1. Die Speisungsleistung für das Zurückziehen des Kolbens 14 trägt das Bezugszeichen 41' und liegt auf der anderen Seite des Kolbens.

Die mit dem Kopfende 2' des Roboterkopfes 2 verbundene Kupplungsträgerplatte I läuft auf einem Kugelkranz 42. Dessen eine Laufrinne befindet sich an einem Flansch 43, welcher über Halteschrauben 44 am Kopfende 2' fixiert ist. Die andere Laufrinne bildet ein in eine formentsprechende Vertiefung der Kupplungsträgerplatte I eingelassener und daran befestigter Ring 45. Letzterer befindet sich im Bereich einer Nabe 46 der Kupplungsträgerplatte I, welche unter Zwischenschaltung eines Federpakets 47 einen zentralen Tragzapfen 48 des Flansches 43 umgibt. Einerends stützt sich das Federpaket auf einer Schulter 49 der Nabe 46 und andernends an Kontermuttern 50 des Tragzapfens 48 ab. Hier kann, wie dargestellt, eine Ringscheibe 51 zwischengelegt sein. Während die Ringscheibe 51 im Bereich des Lochrandes des Federpakets ansetzt, erfolgt die nabenseitige Abstützung im peripheren Bereich des Federpakets. Es ist eine schwimmende Lagerung für die Kupplungsträgerplatte I am Kopfende 2' erreicht. Die von der entsprechend vergrößerten Nabenhöhlung gebildete Federkammer 52 für das Federpaket 47 wird von einer Kappe 53 geschützt überfangen. Letztere ist über Schrauben 54 randseitig mit dem verdickten Bereich der Nabe 46 verbunden. Der domartig in Richtung der werkzeugträgerseitigen Kupplungsträgerplatte II hochgezogene Mittelabschnitt des Deckels 53 formt eine Aufnahme für einen Näherungsinitiator 55. Konkret handelt es sich um eine kappenseitige Gewindebohrung 56, in die das Trägergehäuse 57 des Näherungsinitiators in der Achse y-y liegend eingeschraubt ist. Eine Kontermutter 58 dient der regelbaren Festlegung des zentral in eine Ausdrehung 59 des Tragzapfens 48 hineinragenden Näherungsinitiators. Dessen innenseitiges Stirnende 60 liegt in geringem Abstand vor dem Boden 61 der Ausdrehung 59. Vom gegenüberliegenden Ende des Näherungsinitiators geht ein Kabel 62 aus. Über diese Einrichtung wird der Notfall der Überbelastung in einen das Stillsetzen des Montageroboters veranlassenden Steuerimpuls übersetzt. Die so gebildete Überlast-Sicherungsvorrichtung ist der Multi-Schnellkupplung voll einverleibt.

Die Wirkungsweise ist, kurz zusammengefaßt, wie folgt: Zur Übernahme eines Werkzeuges aus einem Magazin fährt der Roboterarm 1 programmgesteuert in die entsprechende Übernahmeposition, wobei, gegebenenfalls schon überlagernd, die zunächst als Zentrierungszapfen 29 wirkenden Schäfte 15 um das in Fig. 5 angegebene Hubmaß D vorfahren (vergl. Fig. 1 und 2). Unter zunehmernder Verringerung des Abstandes der Trennebene 3 nähern sich die Kolbenschäfte 15 unter linearer Zuführung der roboterseitigen Kupplungsträgerplatte I an die werkzeugträgerseitige Kupplungsträgerplatte II. Die freien Enden 15' fahren in die Stecköffnungen 28 ein. Zur Herbeiführung der Verriegelungsstellung ist lediglich die relativ geringe Kraft der Federn 23 zu überwinden. Hierbei rücken die Sperrkugeln 17 in ihren Ausweichraum 22 aus. Sobald die Ringnut 20 die Ebene der Sperrkugeln erreicht hat, schnappen diese, veranlaßt durch die Rückstellwirkung der Federkraft 23 sperrend in die Ringnut 20 ein. Der Arbeitsdruck des die Ausfahrbewegung der Kolben 14 und 37 bewirkenden Mediums wird abgeschaltet und die Bewegung des Kolbens 14 auf Gegenlauf umgeschaltet. Zuvor hat sich der Schacht 38 um das Maß C rückverlagert. Die nun an den diametral zur Achse y-y angeordneten Schäften 15 verriegelte Kupplungsträgerplatte II wird in Richtung der roboterkopfseitigen Kupplungsträgerplatte gezogen. Die Verschlußkräfte treten nur innerhalb der Armatur auf. Das entsprechend kräfteneutrale Einziehen erlaubt sogar das Überwinden größerer Kräfte, beispielsweise Ventilfederkräfte der Kupplungshälften a,b, Restdrücke, ohne jedoch den Roboterarm 1 zu belasten.

Zum programmgesteuerten Ablegen oder Umrüsten eines Werkzeuges wird in der erläuterten Weise Druck auf den Kolben 37 gelegt, dies unter Durchlaufen des einen Freigang bildenden Abstandes C, welcher dem Entriegelungshub der Verriegelungsbüchse 18 entspricht. Der Schaft 38 stößt gegen den Boden 39 dieser Büchse. Die Kugeln können in den Ausweichraum 22 treten. Nach Wegfall des Sperrhindernisses schließt nun die Ausfahrbewegung des Kolbens 14 über das gleiche

18 250   P 1/P/Rz/Lg.   16.1.1985

Druckmittel an. Die Trennebene 3 vergrößert sich. Zur lagegerechten Positionierung des abgelegten Werkzeugträgers T dient eine Aufnahme 63. Diese in Form einer zylindrischen Bohrung gestaltete Aufnahme eines im Rücken des Werkzeugträgers T angebrachten Schuhes erlaubt das Aufschieben auf einen Tragbolzens des Magazins.

Die Aufnahme kann natürlich auch in der linearen Kupplungsrichtung liegen.

Bei ausgeschobener Verriegelungsbüchse 18 ist der Weg frei für das Ausfahrens des Endes 15' des Schaftes 15. Sämtliche druckmittelbewegten bzw. druckmittelführenden Teile sind durch O-Ringe oder dergl. abgedichtet.

Alle in der Beschreibung erwähnten und in der Zeichnung dargestellten neuen Merkmale sind erfindungswesentlich, auch soweit sie in den Ansprüchen nicht ausdrücklich beansprucht sind.

Patentansprüche

1. Roboter mit am Kopfende des Roboterarmes trennbar angeordnetem Werkzeugträger, dadurch gekennzeichnet, daß die Trennstelle (3) von einer Multi-Schnellkupplung gebildet ist, derart, daß die Kupplungshälften (a bzw. b) zu je einer werkzeugträgerseitigen (II) und roboterkopfseitigen Kupplungsträgerplatte (I,II) zusammengefaßt sind, welche beiden Kupplungsträgerplatten mittels eines der roboterkopfseitigen Kupplungsrägerplatte (I) zugeordneten druckmittel-steuerbaren Zylinder/Kolben-Aggregats bis in die Kupplungsstellung der Kupplungshälften (a,b) gegeneinanderziehbar sind.

2. Roboter nach Anspruch 1, dadurch gekennzeichnet, daß die Kupplungsstellung verriegelbar ist.

3. Roboter nach Anspruch 1, dadurch gekennzeichnet, daß die beiden Kupplungsträgerplatten (I,II) sich linear zueinander bewegen.

4. Roboter nach Anspruch 1, dadurch gekennzeichnet, daß der Multi-Schnellkupplung eine Überlast-Sicherungsvorrichtung integriert ist, derart, daß die roboterkopfseitige Kupplungsträgerplatte (I) unter Zwischenschaltung eines Federpakets (47) schwimmend gelagert ist und die Grundstellung durch einen Näherungsinitiator (55) abgetastet wird.

# FIG. 1

# FIG. 2

0162187 1/3

FIG. 4

FIG. 3

0162187 2/3

# FIG. 5

0162187

Nummer der Anmeldung

**Europäisches Patentamt**

**EUROPÄISCHER RECHERCHENBERICHT**

## EINSCHLÄGIGE DOKUMENTE

EP 85100649.4

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | <u>EP - A2 - 0 088 559</u> (FANUC LTD.)<br>* Gesamt *<br>-- | 1-4 | B 25 J 15/00<br>B 25 J 15/04<br>B 25 J 19/06 |
| Y | <u>EP - A3 - 0 092 967</u> (FANUC LTD.)<br>* Zusammenfassung; Ansprüche;<br>Fig. 1,2 *<br>-- | 1-4 | |
| P,Y | <u>WO - A1 - 84/03 654</u> (NAKASHIMA)<br>* Zusammenfassung; Fig. 1,2 *<br>-- | 1-4 | |
| P,Y | <u>EP - A1 - 0 120 275</u> (PONT-A-MOUS-<br><u>SON S.A.)</u><br>* Zusammenfassung; Ansprüche;<br>Fig. 1-5,7 *<br>-- | 1-4 | |
| P,Y | <u>DE - A1 - 3 310 192</u> (MANTEC)<br>* Gesamt *<br>-- | 1,3,4 | **RECHERCHIERTE SACHGEBIETE (Int Cl 4)**<br><br>B 25 J 15/00<br>B 25 J 17/00<br>B 25 J 19/00 |
| P,Y | <u>DE - A1 - 3 310 070</u> (MANTEC)<br>* Gesamt *<br>-- | 1,2 | |
| P,Y | <u>DE - A1 - 3 313 690</u> (STEITZ)<br>* Anspruch 4 *<br>-- | 1 | |
| Y | <u>WO - A1 - 83/03 217</u> (DRAZAN)<br>* Ansprüche *<br>-- | 4 | |

Der vorliegende Recherchenbericht wurde für alle Patentansprüche erstellt.

| Recherchenort | Abschlußdatum der Recherche | Prüfer |
|---|---|---|
| WIEN | 22-04-1985 | BAUMANN |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

**EUROPÄISCHER RECHERCHENBERICHT**

## EINSCHLÄGIGE DOKUMENTE

EP 85100649.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| P,Y | EP - A1 - 0 120 391 (MANTEC)<br>* Gesamt *<br>-- | 4 | |
| A | US - A - 4 353 677 (K.J.SUSNJARA)<br>* Zusammenfassung; Ansprüche *<br>-- | 1-4 | |
| P,A | EP - A1 - 0 104 118 (LA CACHENE, COMMISSARIAT A L'ENERGIE ATOMIQUE)<br>* Zusammenfassung; Ansprüche *<br>-- | 1-4 | |
| P,A | EP - A1 - 0 128 487 (TRUMPP GMBH)<br>* Ansprüche *<br>---- | 1 | |

RECHERCHIERTE SACHGEBIETE (Int. Cl. 4)

Der vorliegende Recherchenbericht wurde für alle Patentansprüche erstellt.

| Recherchenort | Abschlußdatum der Recherche | Prüfer |
|---|---|---|
| WIEN | 22-04-1985 | BAUMANN |